# EUROPÄISCHE PATENTSCHRIFT

(11) **EP 2 503 068 B1**
(45) Veröffentlichungstag und Bekanntmachung des Hinweises auf die Patenterteilung: **26.12.2018**
(21) Anmeldenummer: 12158082.3
(22) Anmeldetag: 05.03.2012
(51) Int. Cl.: E03C 1/05, E03B 7/07

(54) **Sanitär- oder Heizungsanlage mit mindestens einer elektronisch steuerbaren Armatur**
Sanitary or heating assembly with at least one electronically controlled fitting
Installation sanitaire ou de chauffage doté d'au moins une armature commandable de manière électronique

(30) Priorität: 24.03.2011 DE 202011004387 U
(43) Veröffentlichungstag der Anmeldung: 26.09.2012
(73) Patentinhaber: Viega Technology GmbH & Co. KG, 57439 Attendorn (DE)
(72) Erfinder: Kuhbier, Ulrich, 58849 Herscheid (DE); Awiszus, Marcel, 58509 Lüdenscheid (DE); Heuel, Ralf, 57439 Attendorn (DE); Winterholler, Arthur, 57439 Attendorn (DE); Eberts, Bernd, 57399 Kirchhundem (DE); Rischen, Christian, 59889 Eslohe (DE); Arens, Klaus, 57482 Wenden (DE); Hernandez Aragon, Oscar, 57392 Schmallenberg (DE); Sinoplu, Sudi, 57439 Attendorn (DE); Hennes, Frank, 57413 Finnentrop (DE); Arndt, Johannes, 57368 Lennestadt (DE); Fulgoni, Frank, 59846 Sundern (DE); Gille, Marcel, 57439 Attendorn (DE); Ragoss, Christian, Dr., 51674 Wiehl (DE); Bohr, Karsten, 57439 Attendorn (DE)
(74) Vertreter: Cohausz & Florack

(56) Entgegenhaltungen:
- WO-A1-03/023155
- DE-U1- 8 128 904
- US-A- 5 415 242

## Beschreibung

Die Erfindung betrifft eine Sanitär- oder Heizungsanlage mit mindestens einer elektronisch steuerbaren Armatur, mindestens einer Rohrleitung zur Zuführung von Wasser, insbesondere Trinkwasser zu der mindestens einen elektronisch steuerbaren Armatur, und einer Stromeinspeisevorrichtung zur Stromversorgung der elektronisch steuerbaren Armatur.

Elektronisch gesteuerte Armaturen bieten einen hohen Bedienungskomfort und kommen insbesondere in Sanitärinstallationen immer häufig zum Einsatz. Allerdings erfordert eine elektronisch steuerbare Armatur eine elektrische Spannungsversorgung, die üblicherweise über eine Elektroverkabelung realisiert wird. Eine netzstromunabhängige, d.h. kabellose Spannungsversorgung von elektronisch steuerbaren Armaturen über zum Beispiel Batterien oder Solarzellen ist zwar ebenfalls möglich, ist jedoch hinsichtlich einer permanenten Nutzbarkeit und hohen Verfügbarkeit der elektronischen Steuerung bzw. hinsichtlich eines geringen Wartungsbedarfs unbefriedigend. Denn es möchte wohl kaum jemand vor dem Baden gegebenenfalls zuerst Batterien einer elektronisch gesteuerten Wasser-Mischarmatur gegen neue Batterien tauschen. Zudem belasten akku- oder batteriebetriebene Systeme die Umwelt.

Problematisch hinsichtlich des Einsatzes von elektronisch gesteuerten Armaturen ist grundsätzlich der Umstand, dass die Elektroverkabelung und die Installation von Sanitär- oder Heizungsarmaturen Gewerke sind, die von unterschiedlichen Handwerkern ausgeführt werden, nämlich einerseits vom Elektroinstallateur und andererseits vom Sanitär- und Heizungsinstallateur. Dieser Umstand wird in der Praxis immer wieder dazu führen, dass in Neubauten oder bei Renovierungsmaßnahmen eine Elektroverkabelung zum Anschluss einer elektronisch gesteuerten Armatur vergessen wird und die entsprechende Armatur dann in der Regel nicht zum Einsatz kommen kann. Ferner ist eine 230 Volt-Verkabelung nicht in jedem Bereich eines Sanitärraumes nach DIN VDE 0100 ohne Weiteres erlaubt. Insbesondere im Bereich von Duschen gestaltet sich eine 230 Volt-Verkabelung besonders schwierig.

Die WO 03/023155 A1 beschreibt ein Sanitärsystem, bei dem verschiedene Sanitärkörper, wie z.B. ein Waschbecken und eine Badewanne, jeweils über nur ein flexibles Einzelrohr an einer Verteiler-Mischereinrichtung angeschlossen sind, die mit mindestens einem elektromagnetischen Drei-Wege-Ventil zum Anschluss bzw. Mischen von kaltem und warmen Wasser und Weiterleiten des Mischwassers zu dem jeweiligen Einzelrohr versehen ist. Das andere Ende des jeweiligen Einzelrohres ist an einem Wasserhahn oder Schließventil angeschlossen, mit dem sich der Volumenstrom des Mischwassers einstellen lässt. Nahe dem Wasserhahn ist ein Einstellknopf oder -hebel angeordnet, mittels dem die Temperatur des Mischwassers eingestellt werden kann. Der Einstellknopf oder -hebel ist mit dem elektromagnetischen Ventil des Verteiler-Mischers elektrisch verbunden. Hierzu werden spezielle Speise-Rohre verwendet, die mit mindestens zwei elektrischen Drähten versehen sind, die auf der Oberfläche oder innerhalb der Kunststoffwand des jeweiligen flexiblen Rohres angeordnet sind.

Die DE 81 28 904 U1 offenbart eine Vorrichtung zum Abgeben von Wasser, insbesondere Warmwasser, mit einem Zuführstück einer Wasserleitung und einem Anschlussstück für eine Armatur, wie einen Wasserhahn, wobei in einem Gehäuse neben dem Zuführstück und dem Anschlussstück ein Potentiometer zur Fernsteuerung der Wassertemperatur angeordnet ist. Das Zufuhrstück weist dabei eine innere Leitung auf, die mit einem Isoliermantel verkleidet ist. Zwischen der Leitung und dem Isoliermantel sind vier leitende Drähte angeordnet, die mit dem Potentiometer verbunden sind.

Die US 5 415 242 A beschreibt ein Verfahren und eine Vorrichtung zur Herstellung einer elektrischen Verbindung zwischen Kabelkanälen, insbesondere Kabelkanälen für optische Faserkabel. Das Dokument zeigt einen Kabelkanal, der mit zwei Detektordrähten versehen ist, die in der Wand des Kabelkanals eingebettet und allseitig umschlossen sind, so dass sie gegen Korrosion geschützt sind. Die Detektordrähte sind in V-förmigen Nuten angeordnet, die in dem Kabelkanalmantel ausgebildet sind und anschließend mit einem weichen Füllmaterial verfüllt werden.

Vor diesem Hintergrund liegt der vorliegenden Erfindung die Aufgabe zugrunde, eine Sanitär- oder Heizungsanlage zu schaffen, die eine Versorgung von elektronisch gesteuerten Sanitär- oder Heizungsarmaturen mit Strom ermöglicht bzw. erleichtert.

Diese Aufgabe wird durch eine Sanitär- oder Heizungsanlage mit den Merkmalen des Anspruchs 1 gelöst.

Die erfindungsgemäße Sanitär- oder Heizungsanlage umfasst mindestens eine elektronisch steuerbare Armatur, mindestens eine Rohrleitung zur Zuführung von Wasser, insbesondere Trinkwasser zu der mindestens einen elektronisch steuerbaren Armatur, und eine Stromeinspeisevorrichtung zur Stromversorgung der mindestens einen elektronisch steuerbaren Armatur. Ferner ist die erfindungsgemäße Sanitär- oder Heizungsanlage dadurch gekennzeichnet, dass die mindestens eine Rohrleitung aus einer mindestens einen isolierten elektrischen Leiter aufweisenden Kunststoff-Rohrleitung gebildet ist, wobei die Stromeinspeisevorrichtung mit einem Spannungswandler zur Spannungswandlung auf Niedervoltbasis versehen ist, dessen Ausgang an dem elektrischen Leiter der Kunststoff-Rohrleitung angeschlossen ist, wobei die mindestens eine elektronisch steuerbare Armatur über eine Stromabgreifvorrichtung an dem elektrischen Leiter der Kunststoff-Rohrleitung angeschlossen ist, und wobei der mindestens eine elektrische Leiter rohrförmig ausgebildet und zwischen einem inneren Kunststoffrohr und einem äußeren Kunststoffmantel angeordnet ist.

Die vorliegende Erfindung basiert auf der Idee, eine Wasserleitung im Sanitärbereich zugleich als Stromleitung zu nutzen. Hierfür grundsätzlich geeignete Wasserleitungen sind bereits bekannt. So stellt die Anmelderin unter anderem Mehrschichtverbundrohre her, die aus einem Innenrohr aus Kunststoff (PE-Xc-Innenrohr), einer rohrförmigen Aluminiumschicht und einem Kunststoff-Außenmantel (PE-Xc-Außenmantel) bestehen. Die Aluminiumschicht ist bei einem solchen Mehrschichtverbundrohr mit einer Nennweite von zum Beispiel 16 mm so dimensioniert, dass sie ohne weiteres Strom im Niedervoltbereich, d.h. < 25 Volt bei Wechselstrom bzw. < 60 Volt bei Gleichstrom über eine Strecke von mehr als 10 Meter in isolierter Form leiten kann. Dadurch, dass im Sanitärbereich üblicherweise eine Kaltwasserleitung sowie eine Warmwasserleitung an der Trinkwasser-Entnahmearmatur zur Verfügung stehen, hat man in der Regel zumindest an Sanitärobjekten wie Waschtisch, Bidet, Badewanne und Dusche zwei Wasserleitungen vorliegen, die zugleich als getrennte Stromleiter genutzt werden könnten.

Die erfindungsgemäße Sanitär- oder Heizungsanlage ermöglicht ohne erheblichen Mehraufwand eine Versorgung von elektronisch steuerbaren Sanitär- oder Heizungsarmaturen mit Strom.

Die erfindungsgemäße Lösung bietet ferner die Möglichkeit, den mindestens einen isolierten elektrischen Leiter der mindestens einen Kunststoff-Rohrleitung (Mehrschichtverbundrohrleitung) gegebenenfalls auch zur Übertragung von Datensignalen zu nutzen.

Das Merkmal der erfindungsgemäßen Sanitär- oder Heizungsanlage, dass der mindestens eine elektrische Leiter rohrförmig ausgebildet und zwischen einem inneren Kunststoffrohr und einem äußeren Kunststoffmantel angeordnet ist, lässt sich beispielsweise mittels Mehrschichtverbundrohren der oben genannten Art realisieren. Der elektrische Leiter ist dabei durch eine rohrförmige Metallschicht, vorzugsweise eine Aluminiumschicht gebildet. Die Kontaktierung des elektrischen Leiters mittels einer den äußeren Kunststoffmantel durchdringenden Kontaktkralle oder dergleichen ist durch die rohrförmige Ausgestaltung des elektrischen Leiters erleichtert. Denn hierdurch kann die Kontaktkralle praktisch an jeder Stelle des Umfangs des Mehrschichtverbundrohres angesetzt werden, ohne dass eine Ausrichtung des Schneidelements oder der Schneidelemente der Kontaktkralle relativ zu dem elektrischen Leiter erforderlich ist. Egal wo die Kontaktkralle an dem Mehrschichtverbundrohr angesetzt wird, das bzw. die Schneidelemente der Kontaktkralle treffen stets den rohrförmigen elektrischen Leiter. Entsprechendes gilt für eine Stromabgreifvorrichtung, die ebenfalls in Form einer Kontaktkralle oder dergleichen ausgebildet sein kann. Die rohrförmige Metallschicht (Aluminiumschicht) wirkt zugleich als Sauerstoffsperre, d.h. sie verhindert eine Diffusion von Sauerstoff in das im Kunststoffrohr enthaltene Wasser.

Eine vorteilhafte Ausgestaltung der erfindungsgemäßen Sanitär- oder Heizungsanlage ist dadurch gekennzeichnet, dass in der mindestens einen Kunststoff-Rohrleitung mindestens zwei elektrische Leiter integriert sind, die voneinander elektrisch isoliert sind. Diese Ausgestaltung ist insbesondere dann von Vorteil, wenn die anzuschließende elektronisch steuerbare Armatur lediglich eine einzelne Wasserleitung, beispielsweise lediglich eine Kaltwasserleitung erfordert, d.h. wenn gegebenenfalls keine zweite Wasserleitung an der Armatur angeschlossen wird. Die mindestens zwei elektrischen Leiter, die voneinander elektrisch isoliert in der mindestens einen Kunststoff-Rohrleitung integriert sind, können dabei draht- oder bandförmig ausgebildet sein. Auch umfasst diese Ausgestaltung Ausführungsformen, bei denen der innere der mindestens zwei elektrischen Leiter wiederum rohrförmig ausgebildet ist, während der davon elektrisch isolierte zweite elektrische Leiter draht- oder bandförmig ausgebildet ist und sich in Axialrichtung der Kunststoff-Rohrleitung erstreckt. Darüber hinaus kann diese Ausgestaltung aber auch vorteilhaft sein, wenn an der mindestens einen elektronisch steuerbaren Armatur sowohl eine Kaltwasser- als auch eine Warmwasserleitung angeschlossen werden. In diesem Fall werden durch die beiden Wasserleitungen bzw. Kunststoff-Rohrleitungen, die jeweils mindestens zwei elektrische Leiter aufweisen, mehr als zwei elektrische Leiter zur Verfügung gestellt, so dass sich hinsichtlich der Spannungsversorgung der mindestens einen elektronisch steuerbaren Armatur sowie hinsichtlich einer Datenübertragung zu bzw. von der Armmatur mehr Möglichkeiten bieten als wenn hierfür lediglich zwei elektrische Leiter zur Verfügung stehen.

Eine bevorzugte Ausgestaltung der erfindungsgemäßen Sanitär- oder Heizungsanlage ist dadurch gekennzeichnet, dass die Kunststoff-Rohrleitung als Warmwasserleitung dient und mindestens eine weitere Kunststoff-Rohrleitung vorhanden ist, die als Kaltwasserleitung dient, wobei letztere ebenfalls mindestens einen isolierten elektrischen Leiter aufweist, der einerseits an der Stromeinspeisevorrichtung und andererseits über eine Stromabgreifvorrichtung an der mindestens einen elektronisch steuerbaren Armatur angeschlossen ist. Diese Ausgestaltung ermöglicht es, den mindestens einen isolierten elektrischen Leiter der einen Kunststoff-Rohrleitung, vorzugsweise der Kaltwasserleitung, als stromführenden Leiter (auch Außenleiter oder Phasenleiter genannt) und den mindestens einen isolierten elektrischen Leiter der anderen Kunststoff-Rohrleitung, vorzugsweise der Warmwasserleitung, als Neutralleiter (Nullleiter) zu nutzen.

Nach einer weiteren vorteilhaften Ausgestaltung ist vorgesehen, dass die mindestens eine Kunststoff-Rohrleitung Teil einer mindestens eine Doppelwandscheibe aufweisenden Reihen- oder Ringleitung ist, wobei die Stromabgreifvorrichtung an der mindestens einen Doppelwandscheibe ausgebildet ist, und wobei die mindestens eine Doppelwandscheibe derart ausgebildet ist, dass sie im montierten Zustand eine elektrische Verbindung zwischen dem mindestens einen isolierten elektrischen Leiter der Kunststoff-Rohrleitung und der Stromabgreifvorrichtung bildet. Diese Ausgestaltung ist nicht nur für die Erzielung einer hohen Trinkwassergüte vorteilhaft, da sie den Wasseraustausch in der mindestens einen Kunststoff-Rohrleitung optimiert bzw. eine Wasserstagnation in der Rohrleitung minimiert. Zudem führt diese Ausgestaltung zu einer guten Zugänglichkeit der Stromabgreifvorrichtung, da diese dann an der üblicherweise gut zugänglichen Doppelwandscheibe angeordnet ist.

Eine weitere vorteilhafte Ausgestaltung der erfindungsgemäßen Sanitär- oder Heizungsanlage ist dadurch gekennzeichnet, dass die mindestens eine Kunststoff-Rohrleitung Teil einer mindestens eine Doppelwandscheibe aufweisenden Reihen- oder Ringleitung ist, wobei an der mindestens einen Doppelwandscheibe eine weitere Kunststoff-Rohrleitung angeschlossen ist, die mindestens einen isolierten elektrischen Leiter aufweist, wobei die mindestens eine Doppelwandscheibe gegenüber den isolierten elektrischen Leitern der Kunststoff-Rohrleitungen elektrisch isolierend ausgebildet ist, und wobei eine mit den Kunststoff-Rohrleitungen verbindbare Bypass-Vorrichtung vorhanden ist, die eine Stromabgreifvorrichtung aufweist und im montierten Zustand die isolierten elektrischen Leiter der Kunststoff-Rohrleitungen miteinander elektrisch verbindet. Auch diese Ausgestaltung ist wiederum hinsichtlich der Erzielung einer hohen Trinkwassergüte vorteilhaft. Zudem lässt sich durch die elektrisch isolierende Ausgestaltung der Doppelwandscheibe gegenüber den isolierten elektrischen Leitern der Kunststoff-Rohrleitungen in Fällen, in denen beispielsweise die elektrischen Leiter der Kunststoff-Rohrleitungen aus Aluminium und die Doppelwandscheibe aus Rotguss, Messing oder einer Kupferlegierung hergestellt sind, eine Kontaktkorrosion ausschließen.

Ring- oder Reihenleitungen sind aus verschiedenen Gründen in der Praxis nicht immer realisierbar. Häufig werden daher unter Verwendung von T-Stücken Stichleitungen abgezweigt. Für solche Fälle sieht eine weitere vorteilhafte Ausgestaltung der erfindungsgemäßen Sanitär- oder Heizungsanlage vor, dass die mindestens eine Kunststoff-Rohrleitung über ein T-Stück mit zwei weiteren Kunststoff-Rohrleitungen verbunden ist, von denen mindestens eine ebenfalls mindestens einen isolierten elektrischen Leiter aufweist, wobei das T-Stück derart ausgebildet ist, dass es im montierten Zustand eine elektrische Verbindung zwischen den isolierten elektrischen Leitern der Kunststoff-Rohrleitungen bildet. Diese Ausgestaltung ermöglicht auf einfache und bequeme Weise eine zuverlässige elektrische Verbindung des isolierten elektrischen Leiters einer der Kunststoff-Rohrleitungen mit dem mindestens einen weiteren isolierten elektrischen Leiter der beiden übrigen Kunststoff-Rohrleitungen.

Eine weitere vorteilhafte Ausgestaltung der erfindungsgemäßen Sanitär- oder Heizungsanlage besteht hinsichtlich nicht eingeschleifter Leitungen darin, dass die mindestens eine Kunststoff-Rohrleitung über ein T-Stück mit zwei weiteren Kunststoff-Rohrleitungen verbunden ist, von denen mindestens eine ebenfalls mindestens einen isolierten elektrischen Leiter aufweist, wobei das T-Stück gegenüber den isolierten elektrischen Leitern der Kunststoff-Rohrleitungen elektrisch isolierend ausgebildet ist, und wobei eine mit den Kunststoff-Rohrleitungen verbindbare Bypass-Vorrichtung vorhanden ist, die im montierten Zustand die isolierten elektrischen Leiter der Kunststoff-Rohrleitungen miteinander elektrisch verbindet. Durch diese Ausgestaltung lässt sich wiederum eine Kontaktkorrosion ausschließen, wenn beispielsweise das T-Stück aus Rotguss, Messing oder einer Kupferlegierung und die elektrischen Leiter der Kunststoff-Rohrleitungen aus Aluminium hergestellt sind.

Eine weitere vorteilhafte Ausgestaltung der Erfindung besteht in Bezug auf die vorstehend erwähnten Leitungsanordnungen mit Stichleitung darin, dass das der Abzweigung der Stichleitung dienende T-Stück eine Stromabgreifvorrichtung aufweist. Hierdurch kann eine elektronische Armatur in der Regel einfacher am Stromnetz angeschlossen werden.

Eine zuverlässige Kontaktierung der isolierten elektrischen Leiter der Kunststoff-Rohrleitung lässt sich erzielen, wenn gemäß einer weiteren bevorzugten Ausgestaltung der Erfindung die oben erwähnte Bypass-Vorrichtung elektrisch leitende Schneidelemente aufweist, die jeweils ausgebildet sind, um einen Kunststoffmantel zu durchdringen und so den jeweiligen elektrischen Leiter der Kunststoff-Rohrleitung zu kontaktieren.

Nachfolgend wird die Erfindung anhand einer mehrere Ausführungsbeispiele darstellenden Zeichnung näher erläutert. Es zeigen schematisch:
- Fig. 1: einen Abschnitt einer Vorwandinstallation mit Warm- und Kaltwasserleitungsabschnitten, Anschlusselementen und einer elektrischen Stromeinspeisung, in Vorderansicht;
- Fig. 2: einen Abschnitt einer teilweise verkleideten Badewanne mit einer elektronisch gesteuerten Zu-, Ab- und Überlaufgarnitur, in perspektivischer Ansicht;
- Fig. 3: eine mehrere Anschlusselemente verbindende Wasserleitung in Form einer eingeschleiften Reihenleitung;
- Fig. 4: eine mehrere Anschlusselemente verbindende Wasserleitung in Form einer eingeschleiften Ringleitung;
- Fig. 5: einen Abschnitt einer Vorwandinstallation mit einer Warm- und einer Kaltwasserleitung und davon abzweigenden Stichleitungen zum Anschluss eines Waschbeckens, in Vorderansicht;
- Fig. 6: einen Abschnitt eines Kunststoff-Metall-Verbundrohres für eine erfindungsgemäße Sanitär- oder Heizungsanlage, in perspektivischer Ansicht;
- Fig. 7: eine Querschnittansicht eines gemäß einem anderen Beispiel ausgebildeten Kunststoff-Metall-Verbundrohres für eine Sanitär- oder Heizungsanlage;
- Fig. 8: eine Querschnittansicht eines gemäß einem weiteren Ausführungsbeispiel ausgebildeten Kunststoff-Metall-Verbundrohres für eine erfindungsgemäße Sanitär- oder Heizungsanlage;
- Fig. 9: eine Querschnittansicht eines Rohres gemäß Fig. 6 mit einer Anschlussklemme zur Stromeinspeisung bzw. zum Stromabgriff;
- Fig. 10: zwei Rohre gemäß Fig. 6 in Querschnittansicht mit einer einen elektrischen Leiter aufweisenden Bypass-Vorrichtung, welche die in den Rohren integrierten elektrischen Leiter miteinander elektrisch verbindet;
- Fig. 11: Endabschnitte zweier Rohre gemäß Fig. 6, die durch einen Verbinder miteinander wasserdicht sowie elektrisch leitend verbindbar sind, in Längsschnittansicht; und
- Fig. 12: die Endabschnitte der Rohre der Fig. 11 in verbundenem Zustand, in Längsschnittansicht.

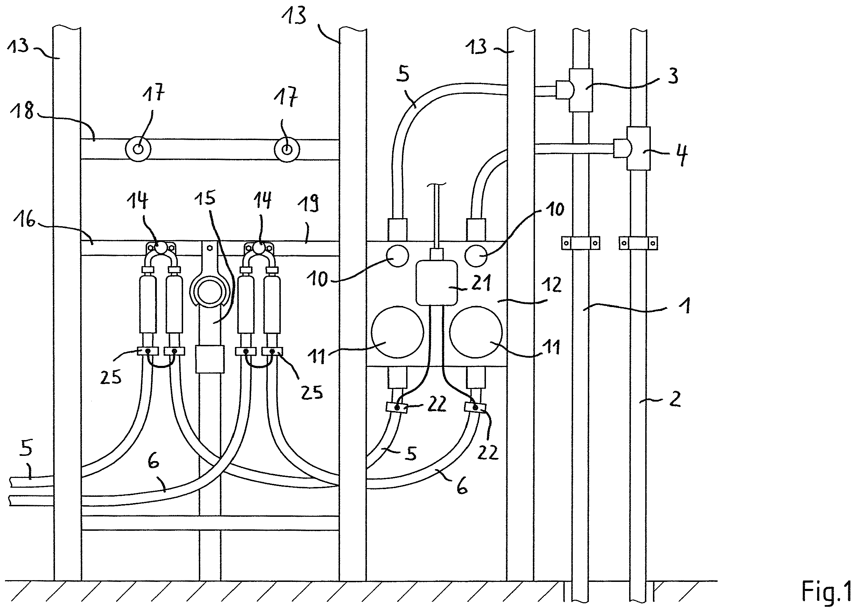

In Fig. 1 sind Abschnitte einer Warm- und einer Kaltwassersteigleitung 1, 2 dargestellt, von denen an T-Stücken 3, 4 in einer Vorwandinstallation eine Warm- und eine Kaltwasserleitung 5, 6 abzweigen. In die Wasserleitungen 5, 6 sind Absperrarmaturen 10 integriert. Ferner kann die jeweilige Absperrarmatur 10 mit einem Wasserzähler 11 kombiniert sein. Vorzugsweise sind die Absperrarmaturen 10 zusammen mit den Wasserzählern 11 an einem Trägermodul 12 vormontiert, das an einem Ständerwerk 13 montiert bzw. montierbar ist.

Von dem Trägermodul 12 ausgehend sind die Wasserleitungen 5, 6 in Form eingeschleifter Reihenleitungen zu mehreren Trinkwasser-Entnahmestellen geführt. Die in Fig. 1 dargestellten Doppelwandscheiben 14 sind für den Anschluss eines Waschtisches bestimmt. Zum wasserdichten Anschluss der Wasserleitungen 5, 6 weist die jeweilige Doppelwandscheibe 14 Pressverbinder (Pressanschlüsse) auf. Zwischen den Doppelwandscheiben 14 ist ein Rohrbogen 15 mit Anschlussstutzen für ein an dem Waschtisch montiertes Ablaufrohr bzw. einen Siphon angeordnet. Die Doppelwandscheiben 14 und der Rohrbogen 15 sind an einem mit dem Ständerwerk 13 höhenverstellbar verbindbaren Trägermodul 16 vormontiert. An dem Trägermodul 16 sind zudem Gewindestangen 17 zur Befestigung eines Waschtisches gehalten. Die die Doppelwandscheiben 14 und die Gewindestangen 17 tragenden Querstreben 18, 19 des Trägermoduls 16 sind hierzu über vertikale Tragschienen miteinander verbunden.

Ausgehend von den Doppelwandscheiben 14 in Fig. 1 sind die Warm- und Kaltwasserleitung 5, 6 zu mindestens einer weiteren Trinkwasser-Entnahmestelle geführt, bei der es sich beispielsweise um einen weiteren Waschtisch, ein Bidet, eine Dusche und/oder eine Badewanne 27 handeln kann. Mindestens eine der Trinkwasser-Entnahmestellen ist mit einer elektronisch steuerbaren Armatur versehen.

Erfindungsgemäß werden eine oder mehrere der Wasserleitungen 5, 6 zur Stromversorgung der mindestens einen elektronisch steuerbaren Armatur genutzt. Hierzu besteht die zur Stromversorgung genutzte Wasserleitung 5, 6 aus einer Rohrleitung, die aus einer mindestens einen isolierten elektrischen Leiter aufweisenden Kunststoff-Rohrleitung gebildet ist.

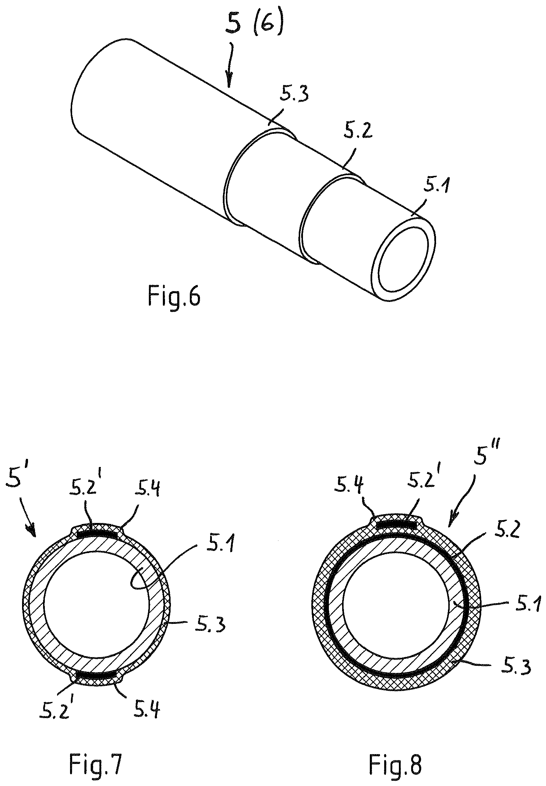

Für diesen Zweck sind insbesondere formstabile, biegbare Kunststoff-Metall-Verbundrohre geeignet, deren Schichtaufbau in Fig. 6 dargestellt ist. Ein solches Rohr besteht aus einem Kunststoff-Innenrohr 5.1, vorzugsweise einem PE-Xc-Innenrohr, einer rohrförmigen Metallschicht 5.2, vorzugsweise einer Aluminiumschicht, und einem Kunststoff-Außenmantel 5.3, vorzugsweise einem PE-Xc-Außenmantel. Das Innenrohr 5.1 weist eine deutlich größere Wandstärke auf als der Außenmantel 5.3 sowie die rohrförmige Metallschicht 5.2. Das MehrschichtVerbundrohr 5 (bzw. 6) ist aufgrund seines kräftig ausgeführten Innenrohres 5.1 formstabil und knickresistent, aber gleichwohl biegbar. Es kann vorzugsweise auch flexibel ausgebildet sein.

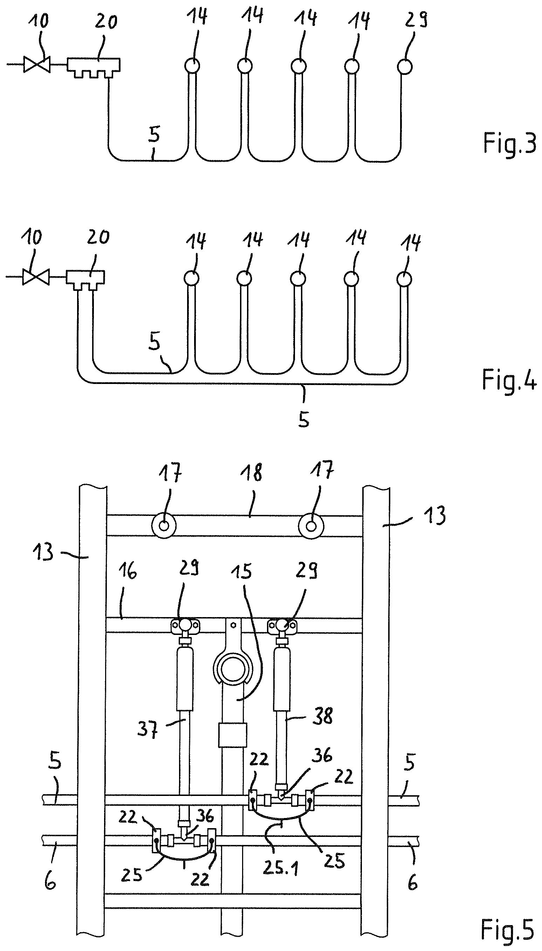

Das Trägermodul 12 oder alternativ ein Wasserverteiler 20 (vgl. Fig. 3) sind erfindungsgemäß mit einer Stromeinspeisevorrichtung versehen. Das Trägermodul 12 bzw. der Wasserverteiler 20 sind dabei vorzugsweise hinter einer Revisionsklappe oder vorzugsweise in einem über eine Revisionsklappe zugänglichen Kasten (nicht gezeigt) angeordnet. Die Stromeinspeisevorrichtung umfasst einen Spannungswandler 21 zur Spannungswandlung auf Niedervoltbasis.

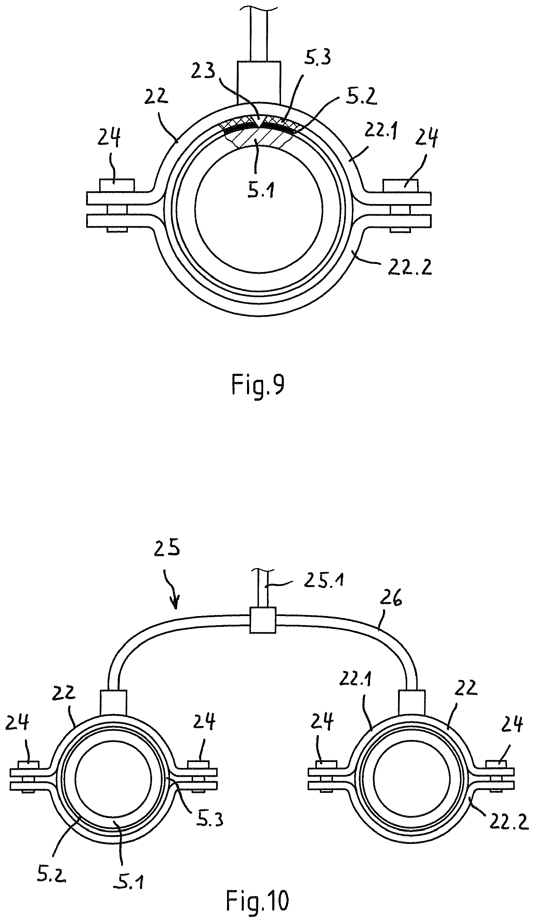

Der Spannungswandler 21 ist ausgangsseitig über Verbindungskrallen oder Anschlussklemmen 22 an dem elektrischen Leiter der jeweiligen Kunststoff-Rohrleitung 5, 6 angeschlossen. Die Verbindungskrallen oder Anschlussklemmen 22 weisen vorzugsweise ein oder mehrere Schneidelemente 23 auf, um den Kunststoffmantel 5.3 der Kunststoff-Rohrleitung zu durchdringen und deren elektrischen Leiter 5.2 zu kontaktieren. Das Schneidelement 23 kann beispielsweise aus einem spitzen Metallstift gebildet sein. Die jeweilige Verbindungskralle oder Anschlussklemme 22 ist beispielsweise in Form einer Klemmschelle ausgeführt, deren Schellenteile 22.1, 22.2 durch eine oder mehrere Schrauben 24 miteinander verbunden bzw. verspannbar sind (vgl. Fig. 9).

Die Metallschicht bzw. der elektrische Leiter 5.2 der Kunststoff-Rohrleitung ist so dimensioniert, dass sie/er bei einer Niedervoltspannung von beispielsweise bis zu 25 Volt Wechselstrom oder bei einer Niedervoltspannung von beispielsweise bis zu 60 Volt Gleichstrom über eine Strecke von mehr als 10 Meter leiten kann.

In dem in Fig. 1 dargestellten Ausführungsbeispiel sind die die Kunststoff-Rohrleitungen 5 bzw. 6 verbindenden Doppelwandscheiben 14 gegenüber den in den Rohrleitungen integrierten elektrischen Leitern 5.2 elektrisch isolierend ausgebildet. Zur Überbrückung der jeweiligen Doppelwandscheibe 14 ist eine mit den Kunststoff-Rohrleitungen 5, 6 verbindbare Bypass-Vorrichtung 25 vorgesehen, die im montierten Zustand die isolierten elektrischen Leiter 5.2 der Kunststoff-Rohrleitungen miteinander elektrisch verbindet. Die Bypass-Vorrichtung 25 weist vorzugsweise eine Stromabgreifvorrichtung 25.1 auf. Über die Stromabgreifvorrichtung 25.1 kann eine in der Nähe der Doppelwandscheiben 14 angeordnete elektronisch gesteuerte Armatur (in Fig. 1 nicht gezeigt), beispielsweise eine elektronisch gesteuerte Wasser-mischarmatur mit Strom bzw. Spannung versorgt werden.

Wie in Fig. 10 gezeigt, ist die Bypass-Vorrichtung 25 beispielsweise aus mindestens zwei Verbindungskrallen oder Anschlussklemmen 22 gebildet, die entsprechend der in Fig. 9 dargestellten Verbindungskralle oder Anschlussklemme 2 ausgeführt sind. Die die elektrischen Leiter 5.2 der Kunststoff-Rohrleitungen kontaktierenden Schneidelemente 23 der Verbindungskrallen oder Anschlussklemmen 22 sind miteinander über ein einen Isoliermantel aufweisendes Verbindungskabel 26 elektrisch verbunden. An dem Verbindungskabel 26 ist vorzugsweise mindestens eine Stromabgreifvorrichtung 25.1 in Form eines Abzweiges vorgesehen.

Alternativ zu einer Bypass-Vorrichtung 25 gemäß den Figuren 1 und 10 kann die Stromabgreifvorrichtung auch an der Doppelwandscheibe 14 selbst ausgebildet sein, wobei die Doppelwandscheibe 14 dann derart ausgebildet ist, dass sie im montierten Zustand eine elektrische Verbindung zwischen der Stromabgreifvorrichtung und dem isolierten elektrischen Leiter 5.2 der an ihr angeschlossenen Kunststoff-Rohrleitung 5 bzw. 6 bildet.

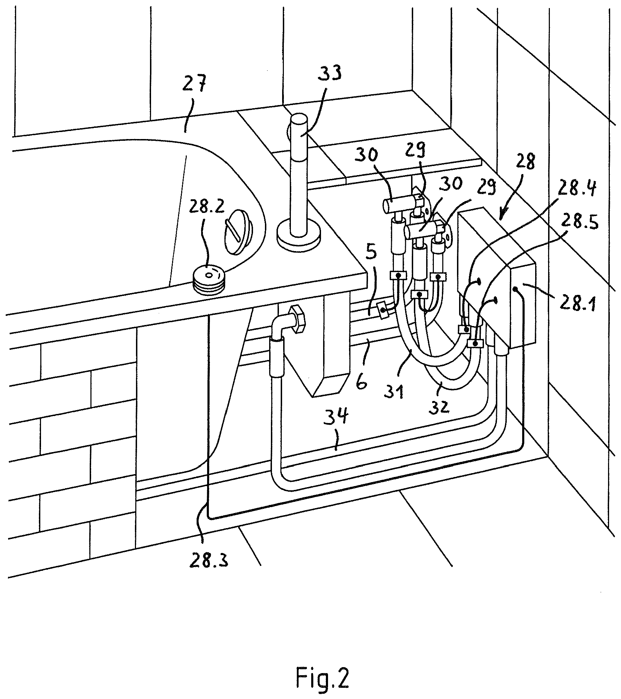

Die in Fig. 1 von den Doppelwandscheiben 14 zu einer weiteren Entnahmestelle verlaufenden Kunststoff-Rohrleitungen 5, 6 können beispielsweise zu einer Zulauf-Mischarmatur einer Dusche und/oder Badewanne geführt sein. In Fig. 2 ist ein Abschnitt einer Badewanne 27 gezeigt, die mit einer elektronisch gesteuerten Zu-, Ab- und Überlaufgarnitur 28 ausgestattet ist. Die Warm- und die Kaltwasserleitung sind an Wandscheiben 29 angeschlossen, an denen Absperrventile (Eckventile) 30 montiert sind.

Mit 28.1 ist eine elektronische Mischeinheit bezeichnet, die eingangsseitig über biegbare Kunststoff-Metall-Rohre oder flexible Schläuche 31, 32 an den Absperrventilen 30 und ausgangsseitig mit dem Eingangsstutzen (nicht gezeigt) eines Wanneneinlaufs sowie einer Handbrause 33 verbunden sind. Die von der Mischeinheit 28.1 zu dem Wanneneinlauf bzw. der Handbrause 33 verlaufenden Wasserleitungen sind mit 34 und 35 bezeichnet. In der Mischeinheit 28.1 ist ein elektronisch gesteuertes Mischventil integriert. Die Bedienung der Mischeinheit 28.1 bzw. des Mischventils erfolgt vorzugsweise über ein einziges Bedienelement, das beispielsweise auf dem Wannenrand montiert wird. Alternativ kann das Bedienelement 28.2 auch auf bzw. in einer an die Badewanne 27 angrenzenden Wand montiert bzw. integriert werden.

Das Bedienelement 28.2 ist als kompakte Multifunktionsbedieneinheit ausgeführt und über ein mehradriges Steuerkabel 28.3 an der elektronischen Mischeinheit 28.1 angeschlossen. Es ermöglicht durch Drehen, Drücken bzw. gleichzeitiges Drehen und Drücken die Einstellung bzw. Steuerung verschiedener Funktionen der elektronischen Mischeinheit 28.1. Beispielsweise lässt sich durch kurzes Drücken des Bedienelements 28.2 eine Wannenbefüllung vollautomatisch auslösen. Die Mischeinheit 28.1 misst und regelt dabei die Wassertemperatur sowie den Durchfluss und beendet automatisch den Zulauf, sobald eine vorgewählte Füllmenge erreicht ist. Die Temperatur des der Wanne zulaufenden Wassers lässt sich durch Drehen des Bedienelements 28.2 einstellen. Die Zulaufmenge, d.h. der Volumenstrom lässt sich durch gleichzeitiges Drücken und Drehen des Bedienelements 28.2 einstellen. In dem Bedienelement 28.2 ist vorzugsweise eine Leuchtvorrichtung integriert, die mit einem Lichtband oder Leuchtring versehen ist, dessen Lichtfarbe sich analog zur eingestellten Wassertemperatur von Blau nach Rot bzw. umgekehrt ändert. Die Licht- bzw. Farbintensität signalisiert dabei die eingestellte Zulaufmenge. Durch längeres Drücken des Bedienelements 28.2 wird vom Wanneneinlauf auf die Handbrause 33 umgestellt. Des Weiteren enthält die Mischeinheit einen Prozessor mit einem Speicher, der es erlaubt, unterschiedliche Voreinstellungen für verschiedene Benutzer der Badewanne 27 zu speichern.

Zur Spannungsversorgung der elektronischen Mischeinheit 28.1 werden erfindungsgemäß die Warm- und/oder die Kaltwasserleitung 5, 6 genutzt, die jeweils aus einer mindestens einen isolierten elektrischen Leiter aufweisenden Kunststoff-Rohrleitung, beispielsweise einer Rohrleitung 5 gemäß Fig. 6 gebildet sind. Die elektronisch steuerbare Mischeinheit 28.1 ist hierzu über als Stromabgreifvorrichtung dienende Verbindungskrallen oder Anschlussklemmen 22 gemäß Fig. 9 an den elektrischen Leitern der Kunststoff-Rohrleitungen 5, 6 angeschlossen. Das Netzkabel der Mischeinheit 28.1 bzw. der Außenleiter (Phasenleiter) 28.4 und der Neutralleiter (Nullleiter) 28.5 des Netzkabels können unmittelbar an den integrierten elektrischen Leitern der mit den Wandscheiben 29 verbundenen Wasserleitungen 5, 6 angeschlossen werden. Es ist jedoch auch möglich, wie in Fig. 2 gezeigt, den Außenleiter 28.4 und den Neutralleiter 28.5 des Netzkabels der Mischeinheit 28.1 an den flexiblen Schläuchen 31, 32 anzuschließen, die von den Absperrventilen (Eckventilen) 30 zu der Mischeinheit 28.1 verlaufen und ebenfalls jeweils mindestens einen elektrischen Leiter aufweisen, und dabei die Absperrventile 30 durch an den Rohrleitungen 5, 6 bzw. Schläuchen 31, 32 angeschlossene Bypass-Vorrichtungen 25 gemäß Fig. 1 bzw. Fig. 10 zu überbrücken.

In Fig. 5 ist eine Vorwandinstallation mit einem Warmwasser- und einem Kaltwasserleitungsabschnitt 5, 6, integrierten T-Stücken 36 und davon abzweigenden Stichleitungen 37, 38 dargestellt, die zum Beispiel dem Anschluss eines Waschbeckens (nicht gezeigt) dienen und hierzu an Wandscheiben 29 angeschlossen sind. Die Warm- und die Kaltwasserleitung 5, 6 bestehen wiederum aus einer Kunststoff-Rohrleitung, die mindestens einen isolierten elektrischen Leiter aufweist, beispielsweise einer Rohrleitung 5 gemäß Fig. 6.

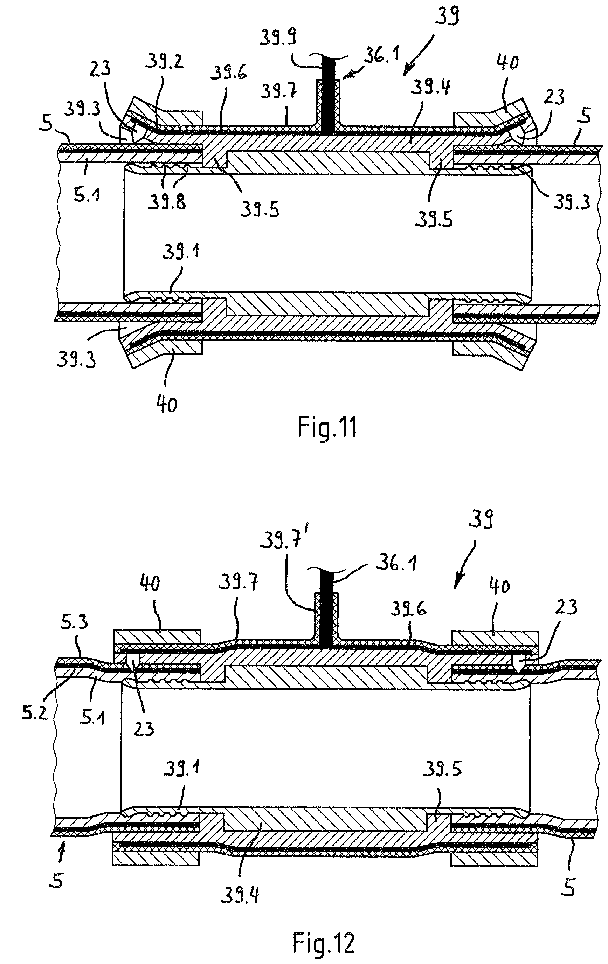

Das jeweilige T-Stück 36 ist vorzugsweise derart ausgebildet, dass es im montierten Zustand eine elektrische Verbindung zwischen den isolierten elektrischen Leitern 5.2 der Kunststoff-Rohrleitungen bildet (vgl. Figuren 11 und 12). Alternativ kann das T-Stück 36 aber auch gegenüber den elektrischen Leitern 5.2 der Kunststoff-Rohrleitungen elektrisch isolierend ausgebildet sein, wobei in diesem Fall eine mit den Kunststoff-Rohrleitungen 5, 6 des betreffenden T-Stücks 36 verbindbare Bypass-Vorrichtung 25 vorgesehen wird, die das T-Stück 36 überbrückt und im montierten Zustand die isolierten elektrischen Leiter 5.2 der Kunststoff-Rohrleitungen 5, 6 miteinander elektrisch verbindet. Die Bypass-Vorrichtung ist dabei beispielsweise gemäß der in Fig. 10 dargestellten Bypass-Vorrichtung 25 ausgeführt.

Das T-Stück 36 oder die Bypass-Vorrichtung 25 weist bei einer Installationssituation gemäß Fig. 5 vorzugsweise eine Stromabgreifvorrichtung 36.1 bzw. 25.1 auf (vgl. Fig. 11 und 12).

Die erfindungsgemäß verwendeten Wasserleitungen 5, 6 können vorteilhaft auch zwei oder mehr isolierte elektrische Leiter aufweisen. In den Figuren 7 und 8 sind Ausführungsbeispiele von biegbaren Kunststoff-Metall-Verbundrohren 5', 5" skizziert, die jeweils zwei isolierte elektrische Leiter 5.2' bzw. 5.2 und 5.2' aufweisen.

Das in Fig. 7 im Querschnitt dargestellte Verbundrohr 5' ist wiederum aus einem Kunststoff-Innenrohr 5.1, vorzugsweise einem PE-Xc-Innenrohr, und einem Kunststoff-Außenmantel 5.3, vorzugsweise einem PE-Xc-Außenmantel gebildet. Zwischen dem Innenrohr 5.1 und dem Außenmantel 5.3 sind im Wesentlichen axial und parallel zueinander verlaufende elektrische Leiter 5.2' angeordnet. Die beiden elektrischen Leiter 5.2' sind vorzugsweise diametral zueinander angeordnet. Sie sind breitbandförmig ausgebildet bzw. besitzen einen flachen Leiterquerschnitt. Die Leiter 5.2' bilden in dem Außenmantel 5.3 kleine, sich axial erstreckende Erhebungen 5.4, anhand derer die Lage der Leiter 5.2' an der Außenseite des Außenmantels 5.3 erkennbar ist. Zusätzlich oder alternativ kann die Lage der Leiter 5.2' durch unterschiedliche farbige Kennzeichnungen, beispielsweise durch eine schwarze oder braune Farblinie für den stromführenden Leiter, eine blaue Farblinie für den Neutralleiter (Nullleiter) und gegebenenfalls eine grün-gelbe Farblinie für den Schutzleiter an der Außenseite des Außenmantels 5.3 markiert sein. Bei drei Leitern 5.2' sind diese vorzugsweise über den Umfang des Innenrohres 5.1 gleichmäßig verteilt angeordnet. Das Innenrohr 5.1 weist eine deutlich größere Wandstärke auf als der Außenmantel 5.3.

Auch das in Fig. 8 im Querschnitt dargestellte Verbundrohr 5" ist aus einem Kunststoff-Innenrohr 5.1, vorzugsweise einem PE-Xc-Innenrohr, und einem Kunststoff-Außenmantel 5.3, vorzugsweise einem PE-Xc-Außenmantel gebildet. Zwischen dem Innenrohr 5.1 und dem Außenmantel 5.3 ist wiederum, wie bei dem Rohr gemäß Fig. 6 eine rohrförmige Metallschicht als elektrischer Leiter 5.2 angeordnet. Die Metallschicht 5.2 kann dabei vorzugsweise auch als Sauerstoffsperrschicht fungieren. Darüber hinaus ist elektrisch isoliert von der rohrförmigen Metallschicht 5.2 mindestens ein weiterer elektrischer Leiter 5.2' in dem Außenmantel 5.3 bzw. dem Verbundrohr 5" integriert. Die Lage des mindestens einen weiteren elektrischen Leiters 5.2' kann dabei wiederum durch eine kleine axiale Erhebung 5.4 und/oder durch eine farbige Kennzeichnung, beispielsweise eine Farblinie auf der Außenseite des Außenmantels 5.3 markiert sein.

Wie oben bereits erwähnt, liegt es insbesondere im Rahmen der Erfindung, anstelle einer Bypass-Vorrichtung 25 gemäß Fig. 10 eine Doppelwandscheibe 14, ein T-Stück 36 und/oder sonstige Verbinder zum Anschluss einer mindestens einen elektrischen Leiter 5.2, 5.2' aufweisenden Kunststoff-Rohrleitung 5, 5', 5", beispielsweise gemäß Fig. 6, bzw. zur Verbindung mehrerer solcher Kunststoff-Rohrleitungen 5, 6, derart auszubilden, dass jedes dieser Anschlussteile (z.B. 14 oder 36) im montierten Zustand eine elektrische Verbindung zwischen dem mindestens einen isolierten elektrischen Leiter 5.2, 5.2' der Kunststoff-Rohrleitung 5, 6 und einer an dem Anschlussteil ausgebildeten Stromabgreifvorrichtung bildet bzw. jeder dieser Verbinder im montierten Zustand eine elektrische Verbindung zwischen den isolierten elektrischen Leitern 5.2, 5.2' der durch ihn verbundenen Kunststoff-Rohrleitungen 5, 6 bildet. Dies ist schematisch in den Figuren 11 und 12 skizziert.

Der in den Figuren 11 und 12 dargestellte Rohrverbinder 39 ist als Pressverbinder ausgeführt. Der Rohrverbinder 39 weist ein rohrförmiges formstabiles Stützelement 39.1 auf, das mit einem dazu koaxial ausgebildeten Klemmabschnitt 39.2 einen Ringspalt 39.3 definiert, in den das Ende eines wasserdicht zu verbindenden bzw. anzuschließenden Rohres 5 einsteckbar ist. Das Stützelement 39.1 besteht vorzugsweise aus Metall, beispielsweise aus Messing oder Rotguss. Es ist mit einer Isolierung 39.4, z.B. einer Kunststoffschicht ummantelt, die einen oder mehrere einwärts gerichtete Vorsprünge 39.5 aufweist, welche den elektrischen Leiter 5.2 des Kunststoffrohres 5 gegenüber dem metallischen Stützelement 39.1 elektrisch isolieren. Außenseitig der das Stützelement 39.1 ummantelnden Isolierung 39.4 ist wiederum ein elektrischer Leiter 39.6, beispielsweise eine rohrförmige Metallschicht angeordnet. Vorzugsweise ist auch der elektrische Leiter 39.6 außenseitig mit einer Isolierung 39.7, z.B. einer Kunststoffschicht ummantelt. Ferner ist der Rohrverbinder 39 mit Presshülsen (Klemmhülsen) 40 versehen, die auf der Außenseite des elektrischen Leiters oder der Isolierung 39.7 des Rohrverbinders 39 angeordnet sind und den jeweiligen Ringspalt 39.3 umgeben. An seiner den Ringspalt 39.3 begrenzenden Außenmantelfläche weist das formstabile Stützelement 39.1 eine oder mehrere umlaufende Rippen 39.8 auf, die im verpressten Zustand des Verbinders 39 in die Innenseite des Kunststoff-Innenrohres 5.1 des in den Ringspalt 39.3 eingesteckten Kunststoff-Metall-Verbundrohres 5 form- und reibschlüssig eingepresst sind.

Das Ende des hülsenförmigen Klemmabschnitts 39.2 des Verbinders 39 ist im unverpressten Zustand konisch nach außen geweitet. Der elektrische Leiter 39.6 des Verbinders 39 ist mit einem ebenfalls elektrisch leitenden Schneidelement 23 versehen ist, welches im Bereich des konisch geweiteten Endes des Klemmabschnitts 39.2 angeordnet ist. Im verpressten Zustand durchdringt das Schneidelement 23 den Kunststoff-Außenmantel 5.3 der Rohrleitung 5 und kontaktiert den darin integrierten elektrischen Leiter 5.2. Das andere Ende des in den Figuren 11 und 12 dargestellten Pressverbinders 5 ist entsprechend ausgebildet.

Des Weiteren kann der Verbinder 39, der beispielsweise auch bogenförmig oder als T-Stück ausgebildet sein kann, eine Stromabgreifvorrichtung 36.1 aufweisen. Die Stromabgreifvorrichtung 36.1 besteht aus einem elektrisch leitenden Anschlusselement 39.9, das ebenfalls mit einem elektrisch isolierenden Außenmantel 39.7' umgeben ist und von dem elektrischen Leiter 39.6, der beispielsweise als rohrförmige Metallschicht ausgebildet ist, radial nach außen abzweigt.

Die Ausführung der Erfindung ist nicht auf die vorstehend beschriebenen und in der Zeichnung dargestellten Ausführungsbeispiele beschränkt. Vielmehr sind zahlreiche Varianten denkbar, die auch bei von den dargestellten Ausführungsbeispielen abweichender Gestaltung von der in den beiliegenden Ansprüchen angegebenen Erfindung Gebrauch machen. Beispielsweise kann die Erfindung auch bei einer mindestens eine elektronisch steuerbare Armatur aufweisenden Heizungsanlage verwirklicht werden. Des Weiteren kann mindestens einer der elektrischen Leiter 5.2, 5.2' einer der Kunststoff-Rohrleitungen 5, 6 auch zur Datenübertragung genutzt werden.

## Patentansprüche

1. Sanitär- oder Heizungsanlage mit mindestens einer elektronisch steuerbaren Armatur (28), mindestens einer Rohrleitung (5, 6) zur Zuführung von Wasser, insbesondere Trinkwasser zu der mindestens einen elektronisch steuerbaren Armatur, und einer Stromeinspeisevorrichtung zur Stromversorgung der mindestens einen elektronisch steuerbaren Armatur, wobei die mindestens eine Rohrleitung (5, 6) aus einer mindestens einen isolierten elektrischen Leiter (5.2, 5.2') aufweisenden Kunststoff-Rohrleitung gebildet ist, wobei die Stromeinspeisevorrichtung mit einem Spannungswandler (21) zur Spannungswandlung auf Niedervoltbasis versehen ist, dessen Ausgang an dem elektrischen Leiter (5.2, 5.2') der Kunststoff-Rohrleitung (5, 6) angeschlossen ist, wobei die mindestens eine elektronisch steuerbare Armatur (28) über eine Stromabgreifvorrichtung (22, 25) an dem elektrischen Leiter (5.2, 5.2') der Kunststoff-Rohrleitung (5, 6) angeschlossen ist, **dadurch gekennzeichnet, dass** der mindestens eine elektrische Leiter (5.2) rohrförmig ausgebildet und zwischen einem inneren Kunststoffrohr (5.1) und einem äußeren Kunststoffmantel (5.3) angeordnet ist.

2. Sanitär- oder Heizungsanlage nach Anspruch 1, **dadurch gekennzeichnet, dass** in der mindestens einen Kunststoff-Rohrleitung (5) mindestens zwei elektrische Leiter (5.2'; 5.2, 5.2') integriert sind, die voneinander elektrisch isoliert sind.

3. Sanitär- oder Heizungsanlage nach Anspruch 1 oder 2, **dadurch gekennzeichnet, dass** die Kunststoff-Rohrleitung (5) als Warmwasserleitung dient und mindestens eine weitere Kunststoff-Rohrleitung (6) vorhanden ist, die als Kaltwasserleitung dient, wobei letztere ebenfalls mindestens einen isolierten elektrischen Leiter (5.2, 5.2') aufweist, der einerseits an der Stromeinspeisevorrichtung (21, 22) und andererseits über eine Stromabgreifvorrichtung (22) an der mindestens einen elektronisch steuerbaren Armatur (28) angeschlossen ist.

4. Sanitär- oder Heizungsanlage nach einem der Ansprüche 1 bis 3, **dadurch gekennzeichnet, dass** die mindestens eine Kunststoff-Rohrleitung (5) Teil einer mindestens eine Doppelwandscheibe (14) aufweisenden Reihen- oder Ringleitung ist, wobei die Stromabgreifvorrichtung an der mindestens einen Doppelwandscheibe (14) ausgebildet ist, und wobei die mindestens eine Doppelwandscheibe (14) derart ausgebildet ist, dass sie im montierten Zustand eine elektrische Verbindung zwischen dem mindestens einen isolierten elektrischen Leiter (5.2) der Kunststoff-Rohrleitung (5, 6) und der Stromabgreifvorrichtung bildet.

5. Sanitär- oder Heizungsanlage nach einem der Ansprüche 1 bis 3, **dadurch gekennzeichnet, dass** die mindestens eine Kunststoff-Rohrleitung (5, 6) Teil einer mindestens eine Doppelwandscheibe (14) aufweisenden Reihen- oder Ringleitung ist, wobei an der mindestens einen Doppelwandscheibe (14) eine weitere Kunststoff-Rohrleitung angeschlossen ist, die mindestens einen isolierten elektrischen Leiter (5.2) aufweist, wobei die mindestens eine Doppelwandscheibe (14) gegenüber den isolierten elektrischen Leitern (5.2) der Kunststoff-Rohrleitungen elektrisch isolierend ausgebildet ist, und wobei eine mit den Kunststoff-Rohrleitungen (5, 6) verbindbare Bypass-Vorrichtung (25) vorhanden ist, die eine Stromabgreifvorrichtung (25.1) aufweist und im montierten Zustand die isolierten elektrischen Leiter (5.2) der Kunststoff-Rohrleitungen (5, 6) miteinander elektrisch verbindet.

6. Sanitär- oder Heizungsanlage nach einem der Ansprüche 1 bis 3, **dadurch gekennzeichnet, dass** die mindestens eine Kunststoff-Rohrleitung (5, 6) über ein T-Stück (36) mit zwei weiteren Kunststoff-Rohrleitungen (5, 6, 37, 38) verbunden ist, von denen mindestens eine ebenfalls mindestens einen isolierten elektrischen Leiter (5.2) aufweist, wobei das T-Stück (36) derart ausgebildet ist, dass es im montierten Zustand eine elektrische Verbindung zwischen den isolierten elektrischen Leitern (5.2) der Kunststoff-Rohrleitungen (5, 6) bildet.

7. Sanitär- oder Heizungsanlage nach einem der Ansprüche 1 bis 3, **dadurch gekennzeichnet, dass** die mindestens eine Kunststoff-Rohrleitung (5, 6) über ein T-Stück (36) mit zwei weiteren Kunststoff-Rohrleitungen (5, 6, 37, 38) verbunden ist, von denen mindestens eine ebenfalls mindestens einen isolierten elektrischen Leiter (5.2) aufweist, wobei das T-Stück (36) gegenüber den isolierten elektrischen Leitern (5.2) der Kunststoff-Rohrleitungen elektrisch isolierend ausgebildet ist, und wobei eine mit den Kunststoff-Rohrleitungen (5, 6) verbindbare Bypass-Vorrichtung (25) vorhanden ist, die im montierten Zustand die isolierten elektrischen Leiter (5.2) der Kunststoff-Rohrleitungen (5, 6) miteinander elektrisch verbindet.

8. Sanitär- oder Heizungsanlage nach Anspruch 6 oder 7, **dadurch gekennzeichnet, dass** das T-Stück eine Stromabgreifvorrichtung (36.1) aufweist.

9. Sanitär- oder Heizungsanlage nach Anspruch 5 oder 7, **dadurch gekennzeichnet, dass** die Bypass-Vorrichtung (25) elektrisch leitende Schneidelemente (23) aufweist, die jeweils ausgebildet sind, um einen Kunststoffmantel (5.3) zu durchdringen und den jeweiligen elektrischen Leiter (5.2) der Kunststoff-Rohrleitung (5) zu kontaktieren.

## Claims

1. Sanitary or heating system having at least one electronically controllable fitting (28), at least one pipe (5, 6) for delivering water, in particular drinking water, to the at least one electronically controllable fitting, and a current supply device for supplying electric power to the at least one electronically controllable fitting, wherein the at least one pipe (5, 6) is formed from a plastic pipe comprising at least one insulated electrical conductor (5.2, 5.2'), wherein the current supply device is connected to a voltage transformer (21) for voltage conversion on a low-voltage basis, the output of which is connected to the electrical conductor (5.2, 5.2') of the plastic pipe (5, 6), wherein the at least one electronically controllable fitting (28) is connected by means of a current tap device (22, 25) to the electrical conductor (5.2, 5.2') of the plastic pipe (5, 6), **characterised in that** the at least one electrical conductor (5.2) is configured tubularly and is arranged between an inner plastic tube (5.1) and an outer plastic sheath (5.3).

2. Sanitary or heating system according to Claim 1, **characterised in that** at least two electrical conductors (5.2'; 5.2, 5.2'), which are electrically insulated from one another, are integrated in the at least one plastic pipe (5).

3. Sanitary or heating system according to Claim 1 or 2, **characterised in that** the plastic pipe (5) is used as a hot water line, and at least one further plastic pipe (6) is provided, which is used as a cold water line, the latter likewise comprising at least one electrical conductor (5.2, 5.2'), which is connected on the one hand to the current supply device (21, 22) and on the other hand by means of the current tap device (22) to the at least one electronically controllable fitting (28).

4. Sanitary or heating system according to any one of Claims 1 to 3, **characterised in that** the at least one plastic pipe (5) is part of a series or ring line comprising at least one double-wall plate (14), the current tap device being formed on the at least one double-wall plate (14), and the at least one double-wall plate (14) being configured in such a way that, in the mounted state, it forms an electrical connection between the at least one insulated electrical conductor (5.2) of the plastic pipe (5, 6) and the current tap device.

5. Sanitary or heating system according to any one of Claims 1 to 3, **characterised in that** the at least one plastic pipe (5, 6) is part of a series or ring line comprising at least one double-wall plate (14), a further plastic pipe, which comprises at least one insulated electrical conductor (5.2), being connected to the at least one double-wall plate (14), the at least one double-wall plate (14) being configured to be electrically insulating in relation to the insulated electrical conductors (5.2) of the plastic pipes, and a bypass device (25) connectable to the plastic pipes (5, 6) being provided, which comprises a current tap device (25.1) and, in the mounted state, electrically connects the insulated electrical conductors (5.2) of the plastic pipes (5, 6) to one another.

6. Sanitary or heating system according to any one of Claims 1 to 3, **characterised in that** the at least one plastic pipe (5, 6) is connected by means of a T-piece (36) to two further plastic pipes (5, 6, 37, 38), at least one of which likewise comprises at least one insulated electrical conductor (5.2), the T-piece (36) being configured in such a way that, in the mounted state, it forms an electrical connection between the insulated electrical conductors (5.2) of the plastic pipes (5, 6).

7. Sanitary or heating system according to any one of Claims 1 to 3, **characterised in that** the at least one plastic pipe (5, 6) is connected by means of a T-piece (36) to two further plastic pipes (5, 6, 37, 38), at least one of which likewise comprises at least one insulated electrical conductor (5.2), the T-piece (36) being configured to be electrically insulating in relation to the insulated electrical conductors (5.2) of the plastic pipes, and a bypass device (25) connectable to the plastic pipes (5, 6) being provided, which, in the mounted state, electrically connects the insulated electrical conductors (5.2) of the plastic pipes (5, 6) to one another.

8. Sanitary or heating system according to Claim 6 or 7, **characterised in that** the T-piece comprises a current tap device (36.1).

9. Sanitary or heating system according to Claim 5 or 7, **characterised in that** the bypass device (25) comprises an electrically conductive blade elements (23), which are respectively configured in order to penetrate through a plastic sheath (5.3) and contact the respective electrical conductor (5.2) of the plastic pipe (5).

## Revendications

1. Installation de sanitaires ou de chauffage comprenant au moins une robinetterie (28) pouvant être commandée électroniquement, comprenant au moins une conduite (5, 6) servant à l'alimentation en eau, en particulier en eau potable fournie à la robinetterie - au moins au nombre de un - pouvant être commandée électroniquement, et comprenant un dispositif d'alimentation en courant électrique pour l'alimentation en courant électrique de la robinetterie - au moins au nombre de un - pouvant être commandée électroniquement, où la conduite (5, 6) au moins au nombre de un est formée par une conduite en matière plastique présentant au moins un conducteur électrique isolé (5.2, 5.2'), où le dispositif d'alimentation en courant électrique est doté d'un transformateur de tension (21) servant à la transformation de la tension sur une base de basse tension, transformateur de tension dont la sortie est raccordée au conducteur électrique (5.2, 5.2') de la conduite (5, 6) en matière plastique, où la robinetterie (28) - au moins au nombre de un - pouvant être commandée électroniquement est raccordée au conducteur électrique (5.2, 5.2') de la conduite (5, 6) en matière plastique, par un dispositif de prélèvement de courant électrique (22, 25), **caractérisée en ce que** le conducteur électrique (5.2) au moins au nombre de un est configuré en ayant une forme tubulaire et est disposé entre un tuyau intérieur (5.1) en matière plastique et une enveloppe extérieure (5.3) en matière plastique.

2. Installation de sanitaires ou de chauffage selon la revendication 1, **caractérisée en ce qu'**au moins deux conducteurs électriques (5.2'; 5.2, 5.2') sont intégrés dans la conduite (5) en matière plastique au moins au nombre de un, lesquels conducteurs sont isolés électriquement l'un de l'autre.

3. Installation de sanitaires ou de chauffage selon la revendication 1 ou 2, **caractérisée en ce que** la conduite (5) en matière plastique sert de conduite d'eau chaude, et au moins une autre conduite (6) en matière plastique est installée, autre conduite qui sert de conduite d'eau froide, où cette dernière présente également au moins un conducteur électrique isolé (5.2, 5.2') qui est raccordé d'une part au dispositif d'alimentation en courant électrique (21, 22), et raccordé d'autre part, par un dispositif de prélèvement de courant électrique (22), à la robinetterie (28) - au moins au nombre de un - pouvant être commandée électroniquement.

4. Installation de sanitaires ou de chauffage selon l'une quelconque des revendications 1 à 3, **caractérisée en ce que** la conduite (5) en matière plastique au moins au nombre de un fait partie d'une conduite en rangée ou d'une conduite annulaire présentant au moins une double plaque de paroi (14), où le dispositif de prélèvement de courant électrique est configuré sur la double plaque de paroi (14) au moins au nombre de un, et où la double plaque de paroi (14) au moins au nombre de un est configurée de manière telle, qu'elle forme, à l'état monté, une liaison électrique entre le conducteur électrique isolé (5.2) au moins au nombre de un de la conduite (5, 6) en matière plastique et le dispositif de prélèvement de courant électrique.

5. Installation de sanitaires ou de chauffage selon l'une quelconque des revendications 1 à 3, **caractérisée en ce que** la conduite (5, 6) en matière plastique au moins au nombre de un fait partie d'une conduite en rangée ou d'une conduite annulaire présentant au moins une double plaque de paroi (14), où une autre conduite en matière plastique est raccordée à la double plaque de paroi (14) au moins au nombre de un, autre conduite en matière plastique qui présente au moins un conducteur électrique isolé (5.2), où la double plaque de paroi (14) au moins au nombre de un est configurée en étant électroisolante par rapport aux conducteurs électriques isolés (5.2) des conduites en matière plastique, et où un dispositif de dérivation (25) est installé et peut être raccordé aux conduites (5, 6) en matière plastique, dispositif de dérivation qui présente un dispositif de prélèvement de courant électrique (25.1) et qui, à l'état monté, relie électriquement, les uns aux autres, les conducteurs électriques isolés (5.2) des conduites (5, 6) en matière plastique.

6. Installation de sanitaires ou de chauffage selon l'une quelconque des revendications 1 à 3, **caractérisée en ce que** la conduite (5, 6) en matière plastique au moins au nombre de un est raccordée aux deux autres conduites (5, 6, 37, 38) en matière plastique, par une pièce en T (36), deux autres conduites en matière plastique dont au moins une présente également au moins un conducteur électrique isolé (5.2), où la pièce en T (36) est configurée de manière telle, qu'elle forme, à l'état monté, une liaison électrique entre les conducteurs électriques isolés (5.2) des conduites (5, 6) en matière plastique.

7. Installation de sanitaires ou de chauffage selon l'une quelconque des revendications 1 à 3, **caractérisée en ce que** la conduite (5, 6) en matière plastique au moins au nombre de un est raccordée aux deux autres conduites (5, 6, 37, 38) en matière plastique, par une pièce en T (36), deux autres conduites en matière plastique dont au moins une présente également au moins un conducteur électrique isolé (5.2), où la pièce en T (36) est configurée en étant électroisolante par rapport aux conducteurs électriques isolés (5.2) des conduites en matière plastique, et où un dispositif de dérivation (25) est installé et peut être raccordé aux conduites (5, 6) en matière plastique, dispositif de dérivation qui, à l'état monté, relie électriquement, les uns aux autres, les conducteurs électriques isolés (5.2) des conduites (5, 6) en matière plastique.

8. Installation de sanitaires ou de chauffage selon la revendication 6 ou 7, **caractérisée en ce que** la pièce en T (36) présente un dispositif de prélèvement de courant électrique (36.1).

9. Installation de sanitaires ou de chauffage selon la revendication 5 ou 7, **caractérisée en ce que** le dispositif de dérivation (25) présente des éléments de coupe (23) électroconducteurs qui sont configurés à chaque fois pour pénétrer une enveloppe (5.3) en matière plastique et pour venir au contact du conducteur électrique respectif (5.2) de la conduite (5) en matière plastique.
